(19) **Europäisches Patentamt European Patent Office Office européen des brevets**

(11) **EP 4 090 012 B1**

(12) **FASCICULE DE BREVET EUROPEEN**

(45) Date de publication et mention de la délivrance du brevet:
**27.09.2023 Bulletin 2023/39**

(21) Numéro de dépôt: **22172796.9**

(22) Date de dépôt: **11.05.2022**

(51) Classification Internationale des Brevets (IPC):
***H04N 7/14*** *(2006.01)*

(52) Classification Coopérative des Brevets (CPC):
**H04N 7/144**

(54) **SYSTEME DE VIDEOCONFERENCE PERMETTANT DE REDUIRE UN EFFET DE PARALLAXE ASSOCIE A LA DIRECTION DU REGARD D'UN UTILISATEUR**

VIDEOKONFERENZSYSTEM ZUR REDUZIERUNG DES PARALLAXENEFFEKTS, DER IN VERBINDUNG MIT DER BLICKRICHTUNG EINES BENUTZERS STEHT

VIDEOCONFERENCING SYSTEM FOR REDUCING A PARALLAX EFFECT ASSOCIATED WITH THE DIRECTION OF THE GAZE OF A USER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.05.2021 FR 2105085**

(43) Date de publication de la demande:
**16.11.2022 Bulletin 2022/46**

(73) Titulaire: **Commissariat à l'énergie atomique et aux énergies alternatives**
**75015 Paris (FR)**

(72) Inventeurs:
• **MARTINEZ, Christophe**
**38054 GRENOBLE cedex 09 (FR)**
• **TEMPLIER, François**
**38054 GRENOBLE cedex 09 (FR)**

(74) Mandataire: **Brevalex**
**Tour Trinity**
**1 B Place de la Défense**
**92400 Courbevoie (FR)**

(56) Documents cités:
US-A1- 2021 021 785    US-A1- 2021 105 434
US-B2- 6 771 303    US-B2- 10 423 830

**Description**

**DOMAINE TECHNIQUE**

Le domaine de l'invention est celui des systèmes de vidéoconférence permettant à des personnes distantes de communiquer entre elles. De tels systèmes de vidéoconférence sont adaptés à transmettre/recevoir des flux multimédias (formés de signaux vidéo et audio) entre eux et en temps réel.

**ÉTAT DE LA TECHNIQUE ANTÉRIEURE**

Les systèmes de vidéoconférence sont de plus en plus utilisés pour permettre à des personnes distantes de communiquer entre elles en temps réel. Ces systèmes transmettent et reçoivent des flux multimédias (signaux audio et vidéo) correspondant à l'image et au son des personnes en communication. Un tel système de vidéoconférence comporte habituellement un écran d'affichage pour afficher les interlocuteurs, une caméra pour filmer l'utilisateur, et une unité de traitement.

Cependant, il est connu que le contact oculaire joue un rôle important dans la qualité de la communication entre les personnes. Le contact oculaire (*eye contact* en anglais) correspond au fait que deux personnes en communication se regardent dans les yeux (contact visuel direct). Or, dans un système de vidéoconférence classique, la caméra est habituellement déportée vis-à-vis de l'écran d'affichage, ce qui se traduit par le fait que l'utilisateur apparaît comme ne regardant pas l'interlocuteur dans les yeux.

On parle alors d'un effet de parallaxe, comme l'indique l'article de Bohannon et al intitulé Eye contact and video-mediated communication: A review Displays Vol.34, Issue 2, 177-185 (2012), se traduisant par un angle non nul, par exemple supérieur à 5°, appelé angle de parallaxe ou erreur de parallaxe, formé entre l'axe de direction du regard de l'utilisateur (*gaze* en anglais) lorsqu'il regarde son interlocuteur dans les yeux, et l'axe optique de la caméra passant par les yeux de l'utilisateur. Pour écarter cet effet de parallaxe, il faudrait alors que l'utilisateur regarde directement la caméra et non plus l'interlocuteur, ce qui n'est pas envisageable dans le cadre des communications humaines.

Différents systèmes de vidéoconférence existent qui tentent de réduire voire annuler l'effet de parallaxe entre les personnes en communication. Ainsi, le document US7126627B1 décrit un système de vidéoconférence comportant une caméra mobile positionnée entre l'utilisateur et l'écran d'affichage, réduisant ainsi l'angle de parallaxe. Cependant, la présence de la caméra en face de l'écran d'affichage peut perturber l'utilisateur. Une autre solution est décrite dans le document WO2019/165124A1 dont l'écran d'affichage du système de vidéoconférence intègre également un imageur matriciel formé d'une matrice d'imageurs matriciels. Ainsi, chaque pixel de l'écran d'affichage comporte une diode électroluminescente ainsi qu'un capteur d'image matriciel, ce qui se traduit par une configuration électronique particulièrement complexe.

**EXPOSÉ DE L'INVENTION**

L'invention a pour objectif de remédier au moins en partie aux inconvénients de l'art antérieur, et plus particulièrement de proposer un système de vidéoconférence permettant de réduire de manière efficace un effet de parallaxe associé à la direction du regard d'un utilisateur qui communique avec un interlocuteur affiché sur son écran en le regardant dans les yeux, sans complexifier outre mesure la configuration électronique de l'écran d'affichage.

Pour cela, l'objet de l'invention est un système de vidéoconférence adapté à transmettre et recevoir des signaux multimédias avec N systèmes distants de vidéoconférence, avec N≥1, permettant à un utilisateur de communiquer en temps réel avec N interlocuteurs utilisant ces systèmes distants, comportant :

- un écran d'affichage, comportant une matrice de pixels émissifs adaptée à afficher, à différents instants $t_i$ d'affichage successifs, une image $I_e(t_i)$ contenant N images $I_{int}^{(k)}(t_i)$ transmises par les systèmes distants et représentant le visage des interlocuteurs ;
- une caméra, adaptée à acquérir, à différents instants $t_j$ d'acquisition successifs, une image $I_c(t_j)$ du visage de l'utilisateur.

Selon l'invention, le système de vidéoconférence comporte :

- un dispositif optique à imageurs mono-pixel, adapté à déterminer N images de correction $I_{co}^{(k)}(t_j)$ à partir de sous-matrices $SM_{imp}^{(k)}(t_j)$ d'au moins un imageur mono-pixel, aux différents instants $t_j$ d'acquisition, comportant :

  o au moins une source optique, adaptée à émettre un faisceau lumineux de longueur d'onde située hors du spectre visible et éclairant une zone angulaire $Z_a$ prédéfinie couvrant une partie oculaire $P_o(t_j)$ du visage de l'utilisateur contenant ses yeux ;
  o une matrice d'imageurs mono-pixel, adaptés chacun à collecter une partie du faisceau lumineux d'éclairage réfléchie par la partie oculaire $P_o(t_j)$ et à reconstruire une image de correction $I_{co}^{(k)}(t_j)$ à partir du faisceau lumineux collecté, comportant chacun une seule région photosensible, les régions photosensibles étant intégrées dans l'écran d'affichage et situées dans une zone principale de l'écran d'affichage dans laquelle sont situées les N images $I_{int}^{(k)}(t_j)$ des interlocuteurs ;

- une unité de traitement, adaptée à :

o déterminer, dans chaque image $I_{int}^{(k)}(t_i)$ de l'image $I_e(t_i)$, un point cible $P_c^{(k)}(t_j)$ situé au niveau des yeux de l'interlocuteur, puis sélectionner N sous-matrices $SM_{imp}^{(k)}(t_j)$ centrées chacune sur un point cible $P_c^{(k)}(t_j)$ ;

o corriger l'image $I_c(t_j)$ en remplaçant une zone de l'image $I_c(t_j)$ représentant la partie oculaire $P_o(t_j)$ par les N images de correction $I_{co}^{(k)}(t_j)$, obtenant ainsi N images corrigées $I_{cc}(t_j)$ à transmettre chacune au système distant de l'interlocuteur correspondant.

Certains aspects préférés mais non limitatifs de ce système de vidéoconférence sont les suivants.

La matrice d'imageurs mono-pixel peut présenter une résolution égale à celle de la matrice de pixels émissifs.

La zone $I_{c\_po}(t_j)$ de l'image $I_c(t_j)$ représentant la partie oculaire $P_o(t_j)$ et remplacée par une image de correction $I_{co}^{(k)}(t_j)$ peut présenter une résolution supérieure à celle d'une zone $I_{c\_br}(t_j)$ de l'image $I_c(t_j)$ entourant la zone $I_{c\_po}(t_j)$.

La zone $I_{c\_br}(t_j)$ de l'image $I_c(t_j)$ peut présenter une résolution inférieure à une résolution native de l'image $I_c(t_j)$ lors de son acquisition par la caméra.

La source optique peut être adaptée à émettre un faisceau lumineux balayant spatialement la zone angulaire $Z_a$ pendant une durée T de balayage, le ou les imageur(s) mono-pixel des N sous-matrices $SM_{imp}^{(k)}(t_j)$ étant adaptés à effectuer $n_i \times p_i$ acquisitions pendant la durée T de balayage.

La source optique peut, en variante, comporter un modulateur optique matriciel et être adaptée à éclairer toute la zone angulaire $Z_a$ de manière simultanée.

L'invention porte également sur un procédé de vidéoconférence d'un utilisateur au moyen du système de vidéoconférence selon l'une quelconque des caractéristiques précédentes, comportant les étapes suivantes :

- réception des N images $I_{int}^{(k)}(t_j)$ transmises par les systèmes distants des interlocuteurs ;
- affichage d'une image $I_e(t_i)$ par l'écran d'affichage, à différents instants d'affichage $t_i$, contenant les images $I_{int}^{(k)}(t_j)$ ;
- détermination des N points cibles $P_c^{(k)}(t_j)$ situés chacun au niveau des yeux d'un interlocuteur ;
- détermination des N sous-matrices $SM_{imp}^{(k)}(t_j)$ d'au moins un imageur mono-pixel, centrées chacune sur un point cible $P_c^{(k)}(t_j)$ déterminé ;
- acquisition d'une image $I_c(t_j)$ du visage de l'utilisateur par la caméra à différents instants d'acquisition $t_j$;
- détermination d'une zone angulaire $Z_a$ couvrant une partie oculaire $P_o(t_j)$ du visage de l'utilisateur contenant ses yeux ;
- émission d'un faisceau lumineux par la source optique de longueur d'onde située hors du spectre visible et éclairant la zone angulaire $Z_a$ ;
- détermination de N images de correction $I_{co}^{(k)}(t_j)$ à partir de sous-matrices $SM_{imp}^{(k)}(t_j)$ dont le ou les imageurs mono-pixel collectent une partie du faisceau lumineux émis et réfléchi par une partie oculaire $P_o(t_j)$ du visage de l'utilisateur située dans la zone angulaire $Z_a$ ;
- correction de l'image $I_c(t_j)$ acquise par la caméra en remplaçant une zone représentant la partie oculaire $P_o(t_j)$ par les N images de correction $I_{co}^{(k)}(t_j)$, obtenant ainsi N images corrigées $I_{cc}(t_j)$ ;
- transmission des N images corrigées $I_{cc}(t_j)$, chacune au système distant de l'interlocuteur correspondant.

La zone angulaire $Z_a(t_j)$ peut être déterminée à partir d'un point de référence $P_u(t_j)$ déterminé dans l'image $I_c(t_j)$ acquise par la caméra et associé aux yeux de l'utilisateur.

Les imageurs mono-pixel qui n'appartiennent pas aux N sous-matrices $SM_{imp}^{(k)}(t_j)$ déterminées peuvent ne pas être activés lors de l'étape d'émission du faisceau lumineux.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1 est une vue en coupe, schématique et partielle, de personnes distantes communiquant entre elles par le biais de systèmes de vidéoconférence, où un utilisateur se sert d'un système de vidéoconférence selon un mode de réalisation pour communiquer ici avec deux interlocuteurs utilisant des systèmes de vidéoconférence distants représentatifs de l'art antérieur ;

la figure 2 est une vue en coupe, schématique et partielle, d'un système de vidéoconférence selon un mode de réalisation et de son utilisateur ;

la figure 3A est une vue de face, schématique, d'un écran d'affichage comportant une surface d'affichage, auquel est assemblé une caméra et ici des sources optiques d'un dispositif optique à imageurs mono-pixel ;

la figure 3B est une vue de face, schématique, d'une image affichée par l'écran d'affichage, cette image intégrant les images des interlocuteurs reçues des systèmes de vidéoconférence distants ;

la figure 4A est une vue de face, schématique et partielle, d'une matrice de pixels émissifs de l'écran d'affichage, dans laquelle sont intégrées des régions photosensibles d'une matrice d'imageurs mono-pixel ;

la figure 4B est une vue en coupe, schématique et partielle, illustrant une région photosensible et une diode électroluminescente adjacente d'un même pixel de l'écran d'affichage, ainsi des éléments optiques (lentilles) ;

la figure 5A est une vue de face, schématique et partielle, d'un écran d'affichage affichant une image avec les visages des interlocuteurs sur laquelle sont positionnées leurs points cibles, qui illustre également le fait que la matrice d'imageurs mono-pixel est répartie en plusieurs sous-matrices prédéfinies identiques ;

la figure 5B est une vue de face du visage de l'utilisateur, sur lequel est positionné un point de référence $P_u(t_j)$ ainsi que la partie oculaire $P_o(t_j)$ du visage de l'utilisateur;

la figure 6 est un organigramme illustrant des étapes d'un procédé de vidéoconférence au moyen du système de vidéoconférence selon un mode de réalisation.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

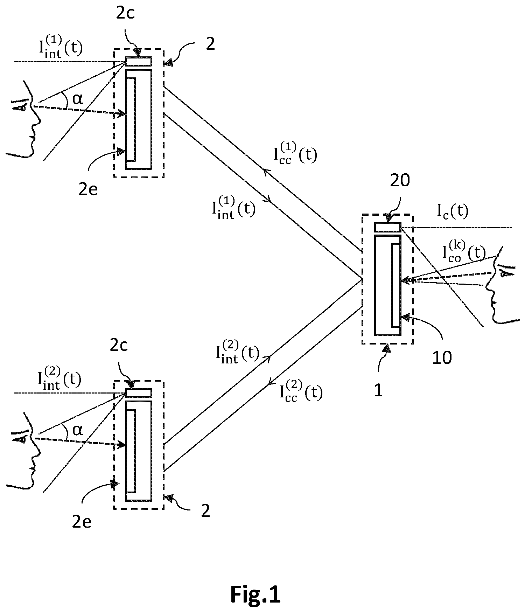

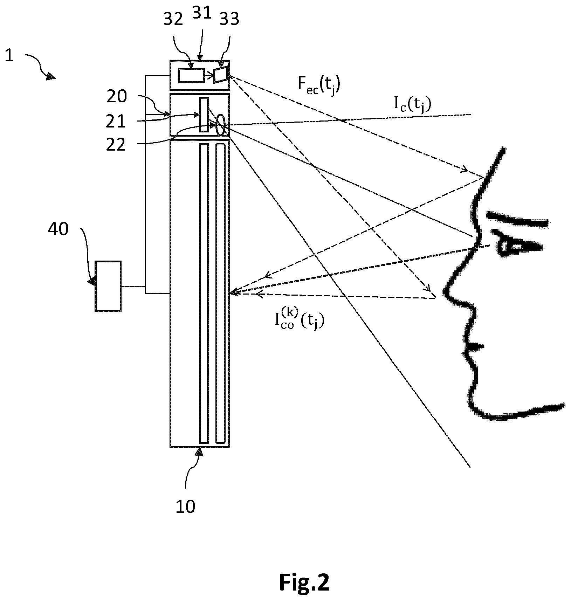

Les figures 1 et 2 sont des vues schématiques d'un système de vidéoconférence 1 selon un mode de réalisation, permettant à un utilisateur de communiquer en temps réel avec N interlocuteurs, chaque interlocuteur utilisant un système de vidéoconférence 2 appelé par la suite 'système distant'. Le nombre N d'interlocuteurs est au moins égal à 1, et est ici égal à 2 (bien qu'il puisse être plus élevé, par exemple égal à 10 voire à davantage). Ce système de vidéoconférence 1 permet de réduire un effet de parallaxe et donc la valeur d'un angle $\alpha$ associé à la direction du regard de l'utilisateur, lorsque cet utilisateur communique avec un interlocuteur affiché sur l'écran d'affichage 10 en le regardant dans les yeux. Autrement dit, l'interlocuteur en question voit l'utilisateur qui le regarde effectivement dans les yeux. En revanche, les systèmes distants 2 sont ici représentatifs de l'art antérieur, et ne permettent donc pas de réduire cet effet de parallaxe.

Le système de vidéoconférence 1 selon ce mode de réalisation comporte :

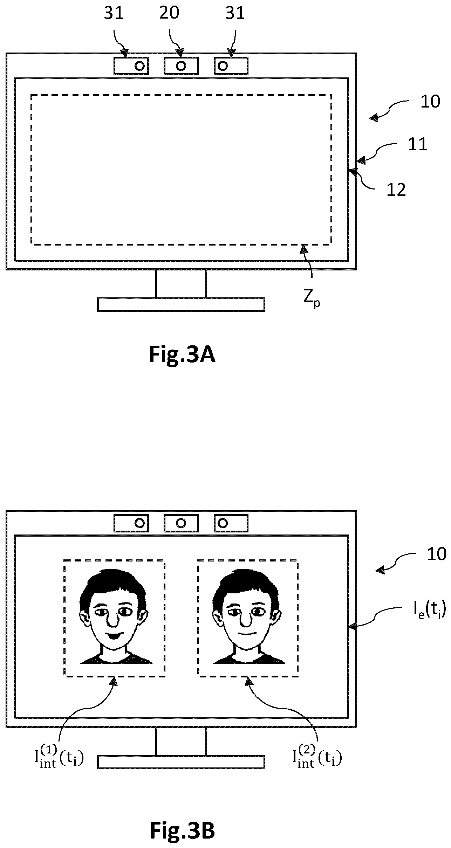

 o un écran d'affichage 10, comportant une matrice de pixels émissifs, adapté à afficher une image $I_e(t_i)$ à différents instants d'affichage $t_i$ successifs, avec une fréquence $f_e$, une image $I_e(t_i)$ contenant les N images $I_{int}^{(k)}(t_i)$ transmises par les systèmes distants et représentant le visage des interlocuteurs (cf. la fig.3B) ;

 o une caméra 20, adaptée à filmer le visage de l'utilisateur, c'est-à-dire à acquérir une image $I_c(t_j)$ du visage de l'utilisateur, à différents instants d'acquisition $t_j$ successifs ;

 o un dispositif optique à imageurs mono-pixel, adapté à déterminer N images $I_{co}^{(k)}(t_j)$ dites de correction, aux différents instants d'acquisition $t_j$, chaque image de correction $I_{co}^{(k)}(t_j)$ étant une image d'une partie oculaire $P_o(t_j)$ du visage de l'utilisateur (i.e.

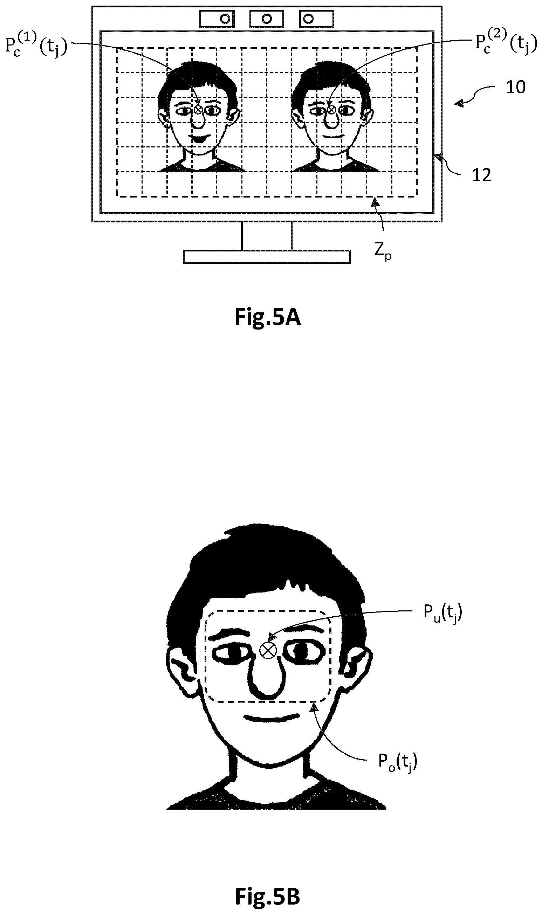

une partie du visage qui contient les yeux - cf. fig.5B), déterminée par au moins un imageur mono-pixel $SM_{imp}^{(k)}(t_j)$ situé à proximité d'un point cible $P_c^{(k)}(t_j)$ déterminé d'un interlocuteur, comportant :

- au moins une source optique 31 adaptée à éclairer la partie oculaire $P_o(t_j)$ du visage de l'utilisateur avec un faisceau lumineux $F_{ec}(t_j)$ de longueur d'onde située hors du spectre visible ;
- une matrice d'imageurs mono-pixel, adaptés chacun à collecter une partie du faisceau lumineux d'éclairage $F_{ec}(t_j)$ réfléchi par la partie oculaire $P_o(t_j)$ du visage de l'utilisateur et à déterminer une image de correction $I_{co}^{(k)}(t_j)$, chaque imageur mono-pixel comportant une seule région photosensible 34, les régions photosensibles 34 étant intégrées dans l'écran d'affichage 10 et situées dans une zone principale ($Z_p$) de l'écran d'affichage 10 dans laquelle sont situées les N images $I_{int}^{(k)}(t_j)$ des interlocuteurs ;

o une unité de traitement 40, adaptée à

- déterminer, dans l'image $I_e(t_i)$ affichée par l'écran 10, N points cibles $P_c^{(k)}(t_j)$ situés chacun au niveau des yeux d'un interlocuteur, et sélectionner N sous-matrices $SM_{imp}^{(k)}(t_j)$ d'imageurs mono-pixel centrées chacune sur un point cible $P_c^{(k)}(t_j)$, chaque sous-matrice d'imageurs mono-pixel comportant au moins un imageur mono-pixel ;
- corriger l'image $I_c(t_j)$ en remplaçant une zone de l'image $I_c(t_j)$ contenant la partie oculaire $P_o(t)$ par chacune des N images de correction $I_{co}^{(k)}(t_j)$, obtenant ainsi N images corrigées $I_{cc}(t_j)$ à transmettre chacune au système distant 2 de l'interlocuteur correspondant.

Le fonctionnement du système de vidéoconférence 1 selon l'invention est présenté ici succinctement, en référence à la fig.1. Les éléments clés du système de vidéoconférence 1 et le procédé de vidéoconférence seront détaillés par la suite.

Un utilisateur utilise un système de vidéoconférence 1 selon l'invention pour communiquer avec ici deux interlocuteurs, chaque interlocuteur utilisant un système distant 2 classique et représentatif de l'art antérieur.

Aussi, ces systèmes distants 2 ne permettent pas de réduire l'effet de parallaxe.

Un premier interlocuteur regarde donc l'écran d'affichage 2e de son système distant 2, pendant que la caméra filme son visage. Ainsi, l'écran d'affichage 2e affiche une image de l'utilisateur à différents instants d'affichage successifs, pendant que la caméra acquiert une image $I_{int}^{(1)}(t_i)$ de cet interlocuteur à différents instants d'acquisition t successifs. L'effet de parallaxe se traduit par un angle $\alpha$ non nul, d'une valeur par exemple supérieure à 5° ou à 10°, formé entre l'axe optique passant par le système optique de collection 22 (cf. fig.2) de la caméra 2c et par les yeux de l'interlocuteur d'une part, et la direction du regard de l'interlocuteur qui regarde l'utilisateur dans les yeux tel qu'affiché sur l'écran d'affichage 2e.

Le premier système distant 2 transmet les images acquises $I_{int}^{(1)}(t_i)$ au système de vidéoconférence 1, et le deuxième système distant 2 transmet les images acquises $I_{int}^{(2)}(t_i)$ au système de vidéoconférence 1. Bien entendu, les deux systèmes distants 2 se transmettent ces mêmes images acquises. Ces images forment un signal vidéo, lequel est accompagné d'un signal audio, les deux signaux formant ainsi un flux multimédia transmis et reçu par chacun des systèmes de vidéoconférence 1, 2.

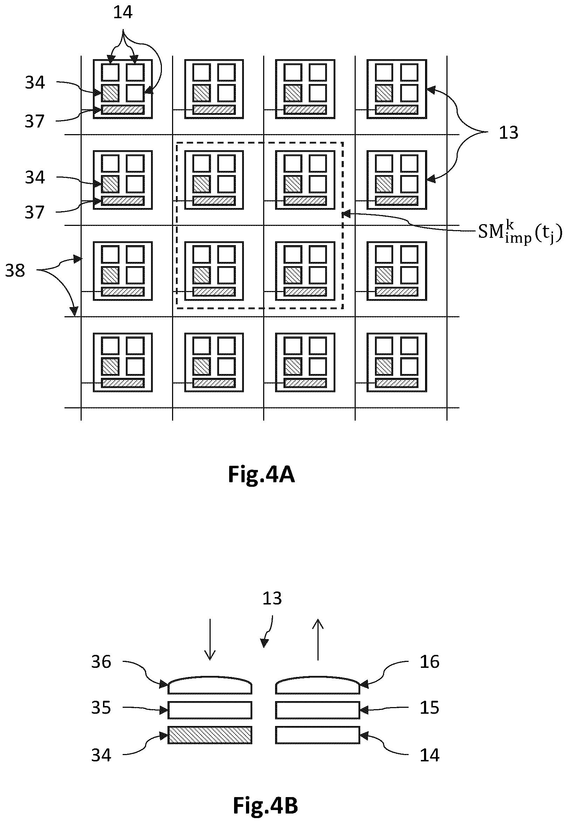

De la même manière, l'utilisateur regarde l'un ou l'autre des interlocuteurs affichés par l'écran d'affichage 10 du système de vidéoconférence 1, pendant que la caméra 20 filme son visage. Ainsi, l'écran d'affichage 10 affiche les images $I_{int}^{(1)}(t_i)$ et $I_{int}^{(2)}(t_i)$ des interlocuteurs à différents instants d'affichage successifs, pendant que la caméra 20 acquiert une image $I_c(t_j)$ de l'interlocuteur à différents instants d'acquisition t successifs. Cependant, comme décrit en détail plus loin, deux sous-matrices $SM_{imp}^{(k)}(t_j)$ d'imageurs mono-pixel déterminent chacune une image $I_{co}^{(k)}(t)$ d'une partie dite oculaire $P_o(t_j)$ du visage de l'utilisateur (partie du visage contenant les yeux). L'indicateur k est relatif aux interlocuteurs : k=1 pour le premier interlocuteur, et k=2 pour le deuxième interlocuteur. Dans la mesure où les régions photosensibles 34 (cf. fig.4A) de ces sous-matrices d'imageurs mono-pixel sont intégrées dans l'écran d'affichage 10 et situées au niveau des yeux de l'un ou l'autre des interlocuteurs, les images déterminées $I_{co}^{(1)}(t_j)$ et $I_{co}^{(2)}(t_j)$ sont des images de la partie oculaire $P_o(t_j)$ du visage de l'utilisateur située dans une zone angulaire $Z_a(t)$ prédéfinie, ayant comme points de vue les interlocuteurs affichés sur l'écran d'affichage 10.

Ainsi, lorsque l'utilisateur regarde dans les yeux le premier interlocuteur affiché sur l'écran d'affichage 10, l'image $I_{co}^{(1)}(t_j)$ déterminée par la sous-matrice $SM_{imp}^{(1)}(t_j)$ d'imageurs mono-pixel correspondante montre les yeux de l'utilisateur qui regarde directement l'interlocuteur. Ainsi, l'angle de parallaxe $\alpha$ est fortement réduit et ici sensiblement nul. C'est le cas également avec l'image $I_{co}^{(2)}(t_j)$ lorsque l'utilisateur regarde dans les yeux le deuxième interlocuteur affiché sur l'écran d'affichage 10.

L'image $I_c(t_j)$ acquise par la caméra 20 est alors corrigée pour former autant d'images corrigées $I_{cc}^{(k)}(t_j)$ qu'il y a d'interlocuteurs. La correction consiste à remplacer la zone de l'image de base $I_c(t_j)$, représentant la partie oculaire $P_o(t_j)$, par l'image $I_{co}^{(1)}(t_j)$, obtenant ainsi l'image corrigée $I_{cc}^{(1)}(t_j)$ à envoyer au premier interlocuteur. La correction est effectuée de la même manière l'image $I_{co}^{(2)}(t_j)$, obtenant ainsi l'image corrigée $I_{cc}^{(2)}(t_j)$ à envoyer au deuxième interlocuteur. Ainsi, l'interlocuteur que l'utilisateur regarde dans les yeux reçoit une image de l'utilisateur avec un angle de parallaxe $\alpha$ quasi nul, tandis que l'autre interlocuteur voit l'utilisateur qui, évidemment, ne le regarde pas dans les yeux mais qui regarde à côté.

Le système de vidéoconférence 1 est maintenant décrit plus en détail, en référence aux fig.2, 3A-3B, 4A-4B, et 5A-5B.

Le système de vidéoconférence 1 comporte un écran d'affichage 10 adapté à afficher une image $I_e(t_i)$ à différents instants d'affichage $t_i$ successifs, à une fréquence $f_e$ prédéfinie. Il comporte une matrice de pixels émissifs de dimension $n_e \times p_e$, cette dimension $n_e \times p_e$ correspondant à la résolution des images affichées $I_e(t_i)$. A titre d'exemple, la fréquence $f_e$ peut être de 10 Hz, et la résolution des images affichées $I_e(t_i)$ peut être de 3840$\times$2160 pixels (dans le cas d'un écran UHD 4K).

Comme l'illustre la fig.3A, l'écran d'affichage 10 comporte un cadre 11 ici rigide, qui entoure et maintient une surface d'affichage 12. La surface d'affichage 12 est formée par la matrice de pixels émissifs. Comme décrit plus loin, le cadre rigide 11 peut également maintenir la caméra 20 ainsi qu'au moins une source optique d'éclairage 31 d'un dispositif optique à imageurs mono-pixel. Comme l'illustre la fig.3B, chaque image $I_e(t_i)$ affichée contient les images $I_{int}^{(k)}(t_i)$ des N interlocuteurs (avec k un entier allant de 1 à N) reçues par les différents systèmes distants 2. Le dispositif optique à imageurs mono-pixel peut comporter, comme illustré ici, plusieurs sources optiques, de manière à améliorer la qualité des images de correction $I_{co}^{(k)}$.

Comme l'illustre la fig.4A, chaque pixel émissif 13 comporte ici au moins une diode électroluminescente 14, et ici trois diodes électroluminescentes 14 par pixel émissif 13 adaptées à émettre un faisceau lumineux à une longueur d'onde prédéfinie, de sorte que la lumière correspondant à un pixel émissif 13 présente les caractéristiques colorimétriques désirées. A titre d'exemple, les trois diodes électroluminescentes 14 d'un même pixel émissif 13 émettent à une même longueur d'onde, et sont associées chacune à un plot photoluminescent 15 adapté à convertir la longueur d'onde incidente en une longueur d'onde différente, par exemple rouge, verte, ou bleue. D'autres configurations de matrice de pixels émissifs sont bien entendu possibles. Comme l'illustre la fig.4B, dans un même pixel émissif 31, une diode électroluminescente 14 peut être recouverte par un plot photoluminescent 15 puis d'un élément optique de projection 16 (lentille).

Le système de vidéoconférence 1 comporte également une caméra 20 adaptée à acquérir une image $I_c(t_j)$, à différents instants $t_j$ d'acquisition successifs, du visage de l'utilisateur. Elle est ici maintenue par le cadre rigide 11 de l'écran d'affichage 10 (cf. fig.3A), et est située à côté de la surface d'affichage 12. Elle présente un champ de vue (*Field of view,* en anglais) suffisant pour collecter les faisceaux lumineux provenant du visage de l'utilisateur. La caméra 20 est un imageur matriciel de type CMOS ou CCD, comportant une matrice de photodiodes 21 ainsi qu'un système optique 22 de collection (lentilles) de la lumière incidente (cf. fig.2). L'image $I_c(t_j)$ acquise par la caméra présente une résolution $n_c \times p_c$, par exemple égale à 1280$\times$720 pixels. La fréquence d'acquisition $f_c$ de la caméra est de préférence au plus égale à la fréquence d'affichage $f_e$, et peut ici être égale à 10 Hz.

Le système de vidéoconférence 1 comporte en outre un dispositif optique à imageurs mono-pixel. Ce dispositif optique est adapté à déterminer (reconstruire) N images dites de correction $I_{po}^{(k)}(t_j)$, avec k allant de 1 à N, aux différents instants d'acquisition $t_j$, ces images de correction $I_{po}^{(k)}(t_j)$ représentant une partie oculaire $P_o(t_j)$ du visage de l'utilisateur avec des points de vue différents. Les points de vue sont la position $P_c^{(k)}(t_j)$ des points cibles situés à proximité des yeux des interlocuteurs affichés sur l'écran d'affichage 10. Pour cela, le dispositif optique comporte au moins une source optique d'éclairage 31 et une matrice d'imageurs mono-pixel, et est connecté à l'unité de traitement 40.

La source optique d'éclairage 31 est adaptée à éclairer la partie oculaire $P_o(t_j)$ du visage de l'utilisateur avec un faisceau lumineux $F_{ec}$ dont la longueur d'onde est située en-dehors du spectre visible, par exemple en-dehors de la gamme allant de 380nm à 780nm (selon la définition donnée par la Commission Internationale de l'Eclairage). A titre d'exemple, la longueur d'onde du faisceau lumineux $F_{ec}$ peut être située dans le proche infrarouge (entre 0.78 et $2\mu$m, $0.78\mu$m étant exclu). La source optique 31 peut comporter une diode laser 32 émettant un faisceau lumineux à la longueur d'onde désirée. La source optique 31 comporte en outre un système optique de projection 33, adapté à transmettre et orienter le faisceau lumineux $F_{ec}$ dans une zone angulaire $Z_a(t_j)$ prédéfinie, dans laquelle est située la partie oculaire $P_o(t_j)$ du visage de l'utilisateur. La zone angulaire $Z_a(t_j)$ peut être définie à partir de l'image $I_c(t_j)$ acquise par la caméra 20, à la fréquence d'acquisition $f_c$ ou à une fréquence plus faible, voire une fois en début de visioconférence. A titre d'exemple, la source optique 31 peut être un dispositif optique à antenne réseau à commande de phase (OPA, pour *Optical Phased Array,* en anglais), comme celui décrit dans l'article de Tyler et al. intitulé SiN integrated optical phased array for two-dimensional beam steering of a single near-infrared wavelength, Opt. Express 27, 5851-5858 (2019). Comme l'illustre la fig.3A, plusieurs sources optiques 31 peuvent être prévues et sont ici disposées de part et d'autre de la caméra 20, de manière à améliorer la qualité des images de correction $I_{po}^{(k)}(t_j)$, notamment autour de reliefs de la partie oculaire du visage, par exemple autour du nez.

Chaque imageur mono-pixel comporte une seule région photosensible 34 adaptée à fournir un signal électrique en réponse à la détection du faisceau lumineux d'éclairage réfléchi. Il peut comporter un circuit de lecture 37 et est connecté à l'unité de traitement 40. A ce titre, une présentation des imageurs photosensibles mono-pixel est donnée notamment dans l'article de Gibson et al. intitulé Single-pixel imaging 12 years on: a review, Opt. Express 28(19), 28190-28208 (2020) ainsi que dans l'article de Duarte et al. intitulé Single-Pixel Imaging via Compressive Sampling, IEEE Signal Processing Mag., Vol.25, No.2, pp.83-91, 2008. Le document FR3063411 décrit également un exemple d'imageur mono-pixel.

Comme l'illustre la fig.4A, chaque pixel émissif 13 de l'écran d'affichage 20 comporte, outre les diodes électroluminescentes 14, une région photosensible 34 et un circuit de lecture 37 d'un imageur mono-pixel. En variante, les régions photosensibles 34 (et les circuits de lecture 37) peuvent ne pas être situées dans chaque pixel émissif de l'écran d'affichage, mais peuvent, par exemple, être disposés dans un pixel émissif 13 sur 2 (voire moins). Par ailleurs, le circuit de lecture 37 de la région photosensible 34 peut ne pas être disposé dans le pixel émissif 13, et être disposé en pied de ligne ou de colonne. Il comporte ici une mémoire permettant de stocker le signal électrique fourni par la région photosensible 34. Enfin, des lignes conductrices 38 assurent la connexion électrique des circuits de lecture 37 avec l'unité de traitement 40.

Comme l'illustre la fig.4B, dans cet exemple, chaque pixel émissif 13 de l'écran d'affichage 10 comporte, outre les diodes électroluminescentes 14, mais également une région photosensible 34 d'un imageur mono-pixel. Celle-ci est située sous un élément optique de collection 36 du faisceau lumineux d'éclairage. Un filtre 35 par exemple multicouche peut être disposé entre l'élément optique de collection 36 et la région photosensible 34 pour filtrer les longueurs d'onde différentes de celle du faisceau lumineux d'éclairage.

D'une manière générale, plusieurs configurations d'imageurs mono-pixel existent dans la littérature, selon que la détection ou l'illumination est modulée optiquement en intensité et/ou en phase. Il est cependant possible, comme décrit ici, de ne pas moduler optiquement le faisceau lumineux d'éclairage. Ainsi, dans ce mode de réalisation, le faisceau lumineux d'éclairage $F_{ec}(t_j)$ n'est pas modulé optiquement : la source optique 31 émet un faisceau lumineux d'éclairage à faible divergence angulaire, et effectue un balayage spatial de la zone angulaire $Z_a(t_j)$ prédéfinie, et donc de la partie oculaire $P_o(t_j)$ du visage de l'utilisateur. Pendant le balayage de la zone angulaire $Z_a(t_j)$, au moins un imageur mono-pixel ayant été activé (celui de sous-matrice $SM_{mp}^{(k)}(t_j)$ à proximité d'un point cible, les autres restant inactifs) reçoit sur sa région photosensible 34 (photodiode) le faisceau lumineux réfléchi par la partie oculaire $P_o(t_j)$. Le faisceau lumineux d'éclairage balaie la zone angulaire $Z_a(t_j)$ pendant une durée T et la région photosensible 34 effectue $n_i \times p_i$ acquisitions (par exemple $300 \times 100$), chaque acquisition correspondant à une position différente du faisceau lumineux d'éclairage dans la zone angulaire $Z_a(t_j)$, et donc sur la partie oculaire $P_o(t_j)$.

Ainsi, l'unité de traitement 40 de l'imageur mono-pixel construit un vecteur d'orientation angulaire $V_{oa}$ dont les termes correspondent à l'orientation angulaire du faisceau lumineux réfléchi dans un référentiel donné, ici celui de l'imageur mono-pixel considéré, pour chaque durée d'acquisition la région photosensible 34, ainsi qu'un vecteur d'intensité optique $V_{io}$ dont les termes correspondent à l'intensité optique du faisceau lumineux réfléchi acquise par la région photosensible 34 pour chaque durée d'acquisition. Les vecteurs $V_{oa}$ et $V_{io}$ présentent donc une dimension $(n_i \times p_i) \times 1$. L'unité de traitement 40 est alors en mesure de reconstruire une image (de correction) $I_{po}^{(k)}(t_j)$ de la partie oculaire $P_o(t_j)$, dont la résolution est $n_i \times p_i$ (par exemple 300x100 pixels). Notons que cette image est en niveaux de gris dans la mesure où le faisceau lumineux d'éclairage est ici monochromatique et que l'imageur mono-pixel ne comporte qu'une seule région photosensible.

La qualité (notamment en termes de sensibilité) des images de correction $I_{po}^{(k)}(t_j)$ peut être améliorée lorsque les termes du vecteur $V_{io}$ sont issus de l'imageur mono-pixel considéré mais également de quelques imageurs mono-pixel adjacents (par exemple 4×4 autres imageurs adjacents). En variante ou en complément, pour obtenir une image de correction $I_{po}^{(k)}(t_j)$, la source optique peut effectuer plusieurs balayages successifs de la zone angulaire $Z_a(t_j)$ et donc de la partie oculaire $P_o(t_j)$ du visage de l'utilisateur pour un même instant d'acquisition $t_j$, l'intensité optique acquise lors d'un balayage pour une orientation angulaire donnée du faisceau lumineux réfléchi venant alors s'ajouter à celle acquise lors du balayage précédent.

Notons ici que le dispositif optique à imageurs mono-pixel peut présenter d'autres configurations. Ainsi, dans le cadre d'une configuration dite à illumination structurée (décrite notamment sur la fig.3 de l'article de Gibson et al. 2020 mentionné précédemment), le faisceau lumineux d'éclairage est tout d'abord réfléchi par un modulateur optique matriciel de sorte qu'il présente un motif donné, puis est projeté sur la partie oculaire du visage de l'utilisateur pour l'éclairer entièrement de manière simultanée. La région photosensible collecte alors le faisceau réfléchi par la partie oculaire lors d'une durée d'acquisition. Cette opération est répétée plusieurs fois, pour différentes configurations du modulateur matriciel. Celui-ci peut être un modulateur à micromiroirs digitaux (DMD, pour *Digital Micro-Mirror Device,* en anglais). Les micromiroirs peuvent présenter différents états, allant d'un état passant dans lequel ils réfléchissent le faisceau lumineux incident, à un état bloquant dans lequel ils ne réfléchissent pas ce faisceau lumineux incident. La matrice de micromiroirs présente une dimension $n_i×p_i$ pour que l'image reconstruite $t_{po}(t_j)$ présente une résolution $n_i×p_i$. on procède à K mesures successives, pour différentes configurations du modulateur optique. Ainsi, l'unité de traitement de l'imageur mono-pixel reçoit une matrice Q des configurations du modulateur optique pour les différentes mesures, la matrice Q étant alors de dimensions $K×(n_i×p_i)$, ainsi qu'un vecteur $v_K$ d'intensité optique, dont les termes correspondent à l'intensité optique du faisceau lumineux réfléchi acquise par la région photosensible pour chaque mesure. On peut alors déterminer, à partir de Q. et $v_K$, un vecteur $v_{io}$ de dimension $(n_i×p_i)×1$ correspondant à l'intensité optique pour les $n_i×p_i$ pixels de l'image de correction $I_{co}^{(k)}(t_j)$ à reconstruire.

Le système de vidéoconférence 1 comporte une unité de traitement 40. Elle est adaptée à effectuer au moins deux étapes clés, à savoir déterminer les N points cibles $P_c^{(k)}(t_j)$ dans l'image $I_e(t_j)$ affichée par l'écran 10, et corriger l'image $I_c(t_j)$ à partir des N images de correction $I_{co}^{(k)}(t_j)$ pour obtenir les N images corrigées $I_{cc}(t_j)$ à transmettre aux N interlocuteurs. Par ailleurs, dans cet exemple, l'unité de traitement coopère avec le dispositif optique à imageurs mono-pixel pour déterminer les N images de correction $I_{co}^{(k)}(t_j)$. Notons ici que, dans le cadre de l'invention, pour corriger une image $I_c(t_j)$ acquise par la caméra et obtenir N images corrigées $I_{cc}(t_j)$ à transmettre aux N interlocuteurs, le dispositif optique à imageurs mono-pixel n'active pas tous les imageurs mono-pixel, mais seulement ceux situés dans les sous-matrices $SM_{mp}^{(k)}(t_j)$ centrées sur les points cibles $P_c^{(k)}(t_j)$ ayant été déterminés.

Ainsi, l'unité de traitement 40 est adaptée à déterminer les N points cibles $P_c^{(k)}(t_j)$ situés dans l'image $I_e(t_j)$ affichée par l'écran d'affichage 10. Un point cible est une position dans l'image $I_e(t_j)$ associée aux yeux d'un interlocuteur. Il s'agit d'un point que l'utilisateur va fixer du regard lorsqu'il souhaite parler à l'interlocuteur en question en le regardant dans les yeux. Ce point cible peut être défini comme étant la position de l'un des yeux de l'interlocuteur, voire un point médian situé entre les deux yeux.

Pour déterminer les points cibles $P_c^{(k)}(t_j)$ dans l'image $I_e(t_j)$, l'unité de traitement 40 procède à une reconnaissance des caractéristiques du visage de chaque interlocuteur. Parmi ces caractéristiques faciales, on retrouve par exemple la forme générale du visage, la position de la bouche, celle du nez et celle des yeux. Cette étape peut être effectuée à chaque instant d'affichage $t_j$ et donc à la fréquence $f_e$, voire à une fréquence inférieure ou encore une seule fois en début de vidéoconférence. Le procédé de reconnaissance faciale est bien connu et n'est pas détaillé ici. La position des yeux du premier interlocuteur est notée $P_{yg}^{(1)}(t_j)$ pour l'oeil gauche et $P_{yd}^{1}(t_j)$ pour l'oeil droit, dans un référentiel de l'écran $R_e(O,X,Y)$, où l'origine O est par exemple située dans le coin inférieur gauche, X est l'axe horizontal et Y l'axe vertical.

A partir des positions $P_{yg}^{(1)}(t_j)$ et $P_{yd}^{(1)}(t_j)$ des yeux du premier interlocuteur, l'unité de traitement détermine le point cible $P_c^{(1)}(t_j)$. Il détermine également

la position du point cible $P_c^{(2)}(t_j)$ associé aux yeux du deuxième interlocuteur. Dans le cas d'un point cible qui est un point médian situé entre les deux yeux, l'ordonnée y du point cible peut être identique à celle des yeux de l'interlocuteur considéré, et l'abscisse est égale à la moyenne de celles de la position des yeux.

A partir de la position des différents points cibles $P_c^{(k)}(t_j)$ avec k allant de 1 à N, l'unité de traitement 40 détermine les N sous-matrices $SM_{imp}^{(k)}(t_j)$ d'imageurs mono-pixel. Chaque sous-matrice $SM_{imp}^{(k)}(t_j)$ d'imageurs mono-pixel est centrée sur le point cible $P_c^{(k)}(t_j)$ considéré. Elle peut ne comporter qu'un seul imageur mono-pixel, c'est-à-dire celui situé le plus près du point cible considéré, ou peut comporter plusieurs imageurs mono-pixel, à savoir l'imageur mono-pixel situé le plus près du point cible considéré et plusieurs imageurs mono-pixel adjacent, de manière à augmenter la sensibilité de la détection.

Comme l'illustre la fig.5A, la matrice d'imageurs mono-pixel peut être divisée en une pluralité de sous-matrices prédéfinies, ici de dimensions identiques les unes aux autres, qui ne changent pas d'un temps d'acquisition $t_j$ à un autre. Les N sous-matrices activées sont celles au niveau desquelles se situent les N points cibles prédéterminés. Les autres restent inactives. En variante, comme mentionné précédemment, chacune des N sous-matrices peut être définie de manière adaptative, en sélectionnant un premier imageur mono-pixel situé le plus proche de la position du point cible considéré d'une part, puis en sélectionnant éventuellement quelques imageurs mono-pixel adjacents au premier imageur mono-pixel.

Notons que cette étape de détermination des sous-matrices $SM_{imp}^{(k)}(t_j)$ d'imageurs mono-pixel peut être effectuée à une fréquence égale ou inférieure à la fréquence d'acquisition $f_c$, voire une seule fois en début de vidéoconférence dans la mesure où le visage des interlocuteurs change peu de positions au cours de la communication.

Ensuite, l'unité de traitement 40 est adaptée à corriger l'image $I_c(t_j)$ à partir des N images de correction $I_{co}^{(k)}(t_j)$ pour obtenir les N images corrigées $I_{cc}^{(k)}(t_j)$ à transmettre aux N interlocuteurs. Pour cela, elle reçoit l'image $I_c(t_j)$ acquise à l'instant d'acquisition $t_j$ par la caméra, ainsi que les N images de correction $I_{co}^{(k)}(t_j)$. Les images de correction sont tout d'abord modifiées pour qu'elles présentent les caractéristiques colorimétriques de la partie oculaire représentée dans l'image $I_c(t_j)$. Ensuite, l'unité de traitement 40 détermine N images corrigées $I_{cc}^{(k)}(t_j)$ en remplaçant la partie oculaire représentée dans l'image de base $I_c(t_j)$ par chacune des N images de correction modifiées $Im_{co}^{(k)}(t_j)$. Chacune des N images corrigées $I_{cc}^{(k)}(t_j)$ sont ensuite transmises à l'interlocuteur concerné.

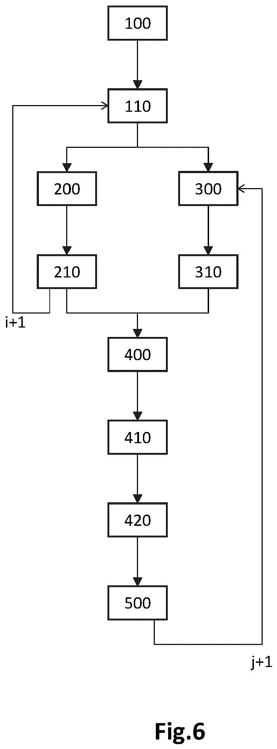

Notons que les N images corrigées $I_{cc}^{(k)}(t_j)$ à transmettre aux N interlocuteurs peuvent présenter un aspect de fovéation, c'est-à-dire que la partie oculaire dans l'image corrigée $I_{cc}^{(k)}(t_j)$ (provenant d'une image de correction $I_{co}^{(k)}(t_j)$) présente une résolution plus importante que la zone de l'image entourant cette partie oculaire. A titre d'exemple, la partie oculaire peut présenter une résolution égale à celle particulièrement élevée de l'écran d'affichage 10, et la zone entourant la partie oculaire peut présenter une résolution inférieure à la résolution native de l'image de base $I_c(t_j)$ de la caméra. Cela permet de réduire le poids en octets des flux vidéo transmis aux systèmes distants. Cet aspect est décrit en détail plus loin en référence à la fig.6.

Ainsi, le système de vidéoconférence 1 selon l'invention permet de réduire de manière efficace l'effet de parallaxe associé à la direction du regard de l'utilisateur lorsqu'il communique avec l'un ou l'autre des N interlocuteurs en le regardant dans les yeux, dans la mesure où il utilise un dispositif optique à imageurs mono-pixel intégrés dans l'écran d'affichage 10, dont seuls les imageurs mono-pixel situés à proximité des points cibles des interlocuteurs sont activés. On se distingue ainsi de l'utilisation d'un imageur matriciel plus classique, intégré dans l'écran d'affichage, comme celui décrit dans le document WO2019/165124. De plus, le poids en octets des flux vidéo transmis par le système de vidéoconférence 1 aux systèmes distants reste inchangé car il est associé à l'image acquise par la caméra et non pas à l'image acquise par l'imageur matriciel intégré à l'écran du document WO2019/165124. De préférence, le poids des images transmises aux systèmes distants 2 peut être réduit lorsque la démarche de fovéation est utilisée.

La figure 6 illustre un organigramme représentant certaines étapes d'un procédé de vidéoconférence dans lequel l'utilisateur utilise le système de vidéoconférence 1 selon le mode de réalisation décrit précédemment pour communiquer avec N interlocuteurs. Dans cet exemple, comme précédemment le nombre N d'interlocuteurs est égal à 2, mais il pourrait être égal à 1 voire être bien supérieur à 2.

Etape 100 : Le système de vidéoconférence 1 reçoit en temps réel les flux multimédias (signaux vidéo et audio) provenant des N systèmes distants 2 des différents interlocuteurs.

Etape 110 : L'écran d'affichage 10 affiche l'image $I_e(t_i)$ à différents instants d'affichage $t_i$, à une fréquence $f_e$. L'image affichée $I_e(t_i)$ contient les N images $I_{int}^{(k)}(t_i)$ des interlocuteurs. A titre d'exemple, l'image $I_e(t_i)$ présente une résolution $n_e \times p_e$ de $3840 \times 2160$ pixels et la fréquence d'affichage $f_e$ est égale à 10 Hz. Les images $I_{int}^{(k)}(t_i)$ des interlocuteurs sont ici disposées côte à côte suivant l'horizontal.

Etape 200 : L'unité de traitement 40 détermine la position $P_c^{(k)}(t_j)$ des points cibles associés aux N interlocuteurs, avec k allant de 1 à N. Cette étape peut être effectuée à différents instants d'acquisition $t_j$ de la caméra ou peut être effectuée à une fréquence plus basse, voire n'être effectuée qu'une fois en début de vidéoconférence. L'unité de traitement 40 effectue une reconnaissance du visage de chaque interlocuteur affiché dans l'image $I_e(t_i)$ et détermine la position $P_c^{(k)}(t_j)$ des N points cibles.

Etape 210 : L'unité de traitement 40 détermine ensuite les N sous-matrices $SM_{mp}^{(k)}(t_j)$ d'imageurs mono-pixel associés aux points cibles $P_c^{(k)}(t_j)$ déterminés. Pour cela, elle détermine l'imageur mono-pixel situé le plus près de la position $P_c^{(k)}(t_j)$ du point cible considéré ainsi que, de préférence, plusieurs imageurs mono-pixel voisins. Le nombre d'imageurs mono-pixel dans chaque sous-matrice est choisi pour améliorer la qualité de l'image de correction $I_{po}^{(k)}(t_j)$ à reconstruire. Les autres imageurs mono-pixel peuvent rester inactifs.

Etape 300 : En parallèle des étapes 110, 200 et 210, la caméra 20 acquiert une image $I_c(t_j)$ du visage de l'utilisateur à différents instants d'acquisition $t_j$ successifs. La fréquence d'acquisition $f_c$ peut être égale à la fréquence d'affichage $f_e$ ou de préférence inférieure à celle-ci. Elle peut ici être égale à 10 Hz. L'image $I_c(t_j)$ présente une résolution $n_c \times p_c$ par exemple égale à $1280 \times 720$ pixels.

Etape 310 : L'unité de traitement 40 détermine ensuite la zone angulaire $Z_a(t_j)$ dans laquelle est située la partie oculaire $P_o(t_j)$ du visage de l'utilisateur. Cette étape peut être effectuée à la fréquence d'acquisition $f_c$, ou à une fréquence inférieure, voire une seule fois en début de vidéoconférence. Ici également, l'unité de traitement 40 détermine la position $P_u(t_j)$ d'un point de référence associé aux yeux de l'utilisateur, dans l'image acquise $I_c(t_j)$. Ce point de référence peut être une position médiane entre les deux yeux de l'utilisateur. Ensuite, à partir des propriétés du dispositif optique de collection 22 de la caméra 20, l'unité de traitement 40 détermine une zone angulaire $Z_a(t_j)$ couvrant la partie oculaire $P_o(t_j)$ du visage de l'utilisateur, c'est-à-dire la partie de son visage qui comprend ses deux yeux.

Etape 400 : Le dispositif optique à imageurs mono-pixel détermine les N images de correction $I_{co}^{(k)}(t_j)$, ayant, comme point de vue, la position $P_c^{(k)}(t_j)$ des différents points cibles. Ces images de correction sont déterminées (reconstruites) par les sous-matrices $SM_{imp}^{(k)}(t_j)$ d'imageurs mono-pixel associés aux points cibles. Pour cela, la source optique 31 émet un faisceau lumineux d'éclairage balayant spatialement la partie oculaire du visage de l'utilisateur en une durée T. Le faisceau lumineux d'éclairage présente une longueur d'onde située ici dans le proche infrarouge, et est ici à faible divergence angulaire. Chaque sous-matrice $SM_{imp}^{(k)}(t_j)$ d'imageurs mono-pixel acquiert le faisceau lumineux réfléchi en $n_i \times p_i$ mesures. Les circuits de lecture de chaque sous-matrice $SM_{imp}^{(k)}(t_j)$ reçoivent un signal de synchronisation de la part du dispositif optique à imageurs mono-pixel, lisent et mémorisent chaque signal de détection acquis par chacune des régions photosensibles 34. L'unité de traitement 40 détermine ensuite les N images de correction $I_{co}^{(k)}(t_j)$. Notons que chaque image de correction $I_{co}^{(k)}(t_j)$ peut ensuite être modifiée pour corriger un effet de perspective.

Etape 410 : L'unité de traitement 40 modifie ensuite les N images de correction $I_{co}^{(k)}(t_j)$ pour qu'elles présentent les caractéristiques colorimétriques de la partie oculaire affichée sur l'image $I_c(t_j)$. La zone $I_{c,po}(t_j)$ de l'image $I_c(t_j)$ comportant la partie oculaire du visage de l'utilisateur est tout d'abord sur-échantillonnée pour présenter la même résolution que chacune des images de correction $I_{co}^{(k)}(t_j)$. La zone $I_{c,po}(t_j)$ de l'image $I_c(t_j)$ est ensuite décomposée dans une base séparant la chromaticité et la luminance, par exemple dans l'espace colorimétrique CIELAB (1976) également noté L*a*b*, qui est une base qui caractérise les couleurs par trois grandeurs (selon trois axes). Une couleur y est caractérisée par un point situé dans la base L*a*b*, où la valeur suivant l'axe a* traduit le caractère rouge/vert (positive si rouge, négative si vert), la valeur suivant l'axe b* traduit le caractère jaune/bleu (positive si jaune, négative si bleu), et où la valeur suivant l'axe vertical L* traduit la clarté (dérive de la luminance), allant du noir pour L*=0 au blanc pour L*=100. Ensuite, on attribue à chaque pixel des images de correction $I_{co}^{(k)}(t_j)$ les caractéristiques colorimétriques associées au pixel correspondant de la zone $I_{c,po}(t_j)$ de l'image $I_c(t_j)$, obtenant ainsi les N images modifiées de correction $Im_{co}^{(k)}(t_j)$. Ainsi, la partie L* de l'image de correction $I_{co}^{(k)}(t_j)$ est conservée, mais les coordonnées a* et b* sont substituées par celles de la zone $I_{c,po}(t_j)$ de l'image $I_c(t_j)$.

Etape 420 : L'unité de traitement détermine les N images corrigées $I_{cc}^{(k)}(t_j)$ à transmettre aux N interlocuteurs. Pour cela, chaque image modifiée de correction $Im_{co}^{(k)}(t_j)$ est superposée à l'image $I_c(t_j)$. Autrement dit, on remplace la zone $I_{c,po}(t_j)$ de l'image $I_c(t_j)$ par une image modifiée de correction $Im_{co}^{(k)}(t_j)$, obtenant ainsi une image corrigée $I_{cc}^{(k)}(t_j)$.

Notons qu'il est avantageux, dans une démarche de fovéation, de considérer ici une version 'dégradée' de l'image de base $I_c(t_j)$, c'est-à-dire une version $I_{c,b}(t_j)$ de l'image de base $I_c(t_j)$ présentant une résolution inférieure à la résolution initiale. Ainsi, chaque image corrigée $I_{cc}^{(k)}(t_j)$ présente une zone à haute résolution qui correspond à la partie oculaire (provenant de l'image modifiée de correction $Im_{co}^{(k)}(t_j)$) et une zone de basse résolution qui entoure la partie oculaire.

Etape 500 : L'unité de traitement transfère alors l'image corrigée $I_{cc}^{(1)}(t_j)$ au système distant du premier interlocuteur, et l'image corrigée $I_{cc}^{(2)}(t_j)$ système distant du deuxième interlocuteur. Ainsi, lorsque l'utilisateur regarde le premier interlocuteur dans les yeux (i.e. en regardant le point position $P_c^{(1)}(t_j)$, l'image corrigée $I_{cc}^{(1)}(t_j)$ montre l'utilisateur avec un angle de parallaxe sensiblement nul. Cet interlocuteur voit alors l'utilisateur qui le regarde dans les yeux. En revanche, l'autre interlocuteur voit l'utilisateur qui ne le regarde pas directement, mais qui regarde à côté.

Des modes de réalisation particuliers viennent d'être décrits. Différentes variantes et modifications apparaîtront à l'homme du métier.

## Revendications

1. Système de vidéoconférence (1), adapté à transmettre et recevoir des signaux multimédias avec N systèmes distants (2) de vidéoconférence, avec N≥1, permettant à un utilisateur de communiquer en temps réel avec N interlocuteurs utilisant ces systèmes distants (2), comportant :

   o un écran d'affichage (10), comportant une matrice de pixels émissifs adaptée à afficher, à différents instants $t_i$ d'affichage successifs, une image $I_e(t_i)$ contenant N images $I_{int}^{(k)}(t_i)$ transmises par les systèmes distants (2) et représentant le visage des interlocuteurs ;
   o une caméra (20), adaptée à acquérir, à différents instants $t_j$ d'acquisition successifs, une image $I_c(t_j)$ du visage de l'utilisateur ;
   o **caractérisé en ce qu'**il comporte :

      o un dispositif optique à imageurs mono-pixel, adapté à déterminer N images de correction $I_{co}^{(k)}(t_j)$ à partir de sous-matrices $SM_{imp}^{(k)}(t_j)$ d'au moins un imageur mono-pixel, aux différents instants $t_j$ d'acquisition, comportant :

         • au moins une source optique (31), adaptée à émettre un faisceau lumineux de longueur d'onde située hors du spectre visible et éclairant une zone angulaire $Z_a$ prédéfinie couvrant une partie oculaire $P_o(t_j)$ du visage de l'utilisateur contenant ses yeux ;

         • une matrice d'imageurs mono-pixel, adaptés chacun à collecter une partie du faisceau lumineux d'éclairage réfléchie par la partie oculaire $P_o(t_j)$ et à reconstruire une image de correction $I_{co}^{(k)}(t_j)$ à partir du faisceau lumineux collecté, comportant chacun une seule région photosensible (34), les régions photosensibles (34) étant intégrées dans l'écran d'affichage (10) et situées dans une zone principale ($Z_p$) de l'écran d'affichage (10) dans laquelle sont situées les N images $I_{int}^{(k)}(t_j)$ des interlocuteurs ;

o une unité de traitement (40), adaptée à :

• déterminer, dans chaque image $I_{int}^{(k)}(t_i)$ de l'image $I_e(t_i)$, un point cible $P_c^{(k)}(t_j)$ situé au niveau des yeux de l'interlocuteur, puis sélectionner N sous-matrices $SM_{imp}^{(k)}(t_j)$ centrées chacune sur un point cible $P_c^{(k)}(t_j)$ ;

• corriger l'image $I_c(t_j)$ en remplaçant une zone de l'image $I_c(t_j)$ représentant la partie oculaire $P_o(t_j)$ par les N images de correction $I_{co}^{(k)}(t_j)$, obtenant ainsi N images corrigées $I_{cc}(t_j)$ à transmettre chacune au système distant de l'interlocuteur correspondant.

2. Système de vidéoconférence (1) selon la revendication 1, dans lequel la matrice d'imageurs mono-pixel présente une résolution égale à celle de la matrice de pixels émissifs.

3. Système de vidéoconférence (1) selon la revendication 1 ou 2, dans lequel la zone $I_{c\_po}(t_j)$ de l'image $I_c(t_j)$ représentant la partie oculaire $P_o(t_j)$ et remplacée par une image de correction $I_{co}^{(k)}(t_j)$ présente une résolution supérieure à celle d'une zone $I_{c\_br}(t_j)$ de l'image $I_c(t_j)$ entourant la zone $I_{c\_po}(t_j)$.

4. Système de vidéoconférence (1) selon la revendication 3, dans lequel la zone $I_{c\_br}(t_j)$ de l'image $I_c(t_j)$ présente une résolution inférieure à une résolution native de l'image $I_c(t_j)$ lors de son acquisition par la caméra (20).

5. Système de vidéoconférence (1) selon l'une quelconque des revendications 1 à 4, dans lequel la source optique (31) est adaptée à émettre un faisceau lumineux ($F_{ec}$) balayant spatialement la zone angulaire $Z_a$ pendant une durée T de balayage, le ou les imageur(s) mono-pixel des N sous-matrices $SM_{imp}^{(k)}(t_j)$ étant adaptés à effectuer $n_i \times p_i$ acquisitions pendant la durée T de balayage.

6. Système de vidéoconférence (1) selon l'une quelconque des revendications 1 à 5, dans lequel la source optique (31) comporte un modulateur optique matriciel et est adaptée à éclairer toute la zone angulaire $Z_a$ de manière simultanée.

7. Procédé de vidéoconférence d'un utilisateur au moyen du système de vidéoconférence selon l'une quelconque des revendications précédentes, comportant les étapes suivantes :

o réception des N images $I_{int}^{(k)}(t_j)$ transmises par les systèmes distants (2) des interlocuteurs,
o affichage d'une image $I_e(t_i)$ par l'écran d'affichage (10), à différents instants d'affichage $t_i$, contenant les images $I_{int}^{(k)}(t_j)$ ;
o détermination des N points cibles $P_c^{(k)}(t_j)$ situés chacun au niveau des yeux d'un interlocuteur ;
o détermination des N sous-matrices $SM_{imp}^{(k)}(t_j)$ d'au moins un imageur mono-pixel, centrées chacune sur un point cible $P_c^{(k)}(t_j)$ déterminé ;
o acquisition d'une image $I_c(t_j)$ du visage de l'utilisateur par la caméra (20) à différents instants d'acquisition $t_j$;
o détermination d'une zone angulaire $Z_a$ couvrant une partie oculaire $P_o(t_j)$ du visage de l'utilisateur contenant ses yeux ;
o émission d'un faisceau lumineux par la source optique (31) de longueur d'onde située hors du spectre visible et éclairant la zone angulaire $Z_a$ ;
o détermination de N images de correction $I_{co}^{(k)}(t_j)$ à partir de sous-matrices $SM_{imp}^{(k)}(t_j)$ dont le ou les imageurs mono-pixel collectent une partie du faisceau lumineux émis et réfléchi par une partie oculaire $P_o(t_j)$ du visage de l'utilisateur située dans la zone angulaire $Z_a$ ;
o correction de l'image $I_c(t_j)$ acquise par la caméra (20) en remplaçant une zone représentant la partie oculaire $P_o(t_j)$ par les N images de correction $I_{co}^{(k)}(t_j)$, obtenant ainsi N images corrigées $I_{cc}(t_j)$ ;
o transmission des N images corrigées $I_{cc}(t_j)$, chacune au système distant de l'interlocuteur correspondant.

8. Procédé de vidéoconférence selon la rev.7, dans lequel la zone angulaire $Z_a(t_j)$ est déterminée à partir d'un point de référence $P_u(t_j)$ déterminé dans l'image $I_c(t_j)$ acquise par la caméra (20) et associé aux yeux de l'utilisateur.

9. Procédé de vidéoconférence selon la rev.8, dans lequel les imageurs mono-pixel qui n'appartiennent pas aux N sous-matrices $SM_{imp}^{(k)}(t_j)$ déterminées ne sont pas activés lors de l'étape d'émission du faisceau lumineux.

**Patentansprüche**

1. Videokonferenzsystem (1), das geeignet ist, Multimediasignale an N ferne Videokonferenzsysteme (2) zu übertragen und von diesen zu empfangen, wobei N ≥ 1, das es einem Benutzer ermöglicht, in Echtzeit mit N Gesprächspartnern, die diese fernen Systeme (2) verwenden, zu kommunizieren, umfassend:

    o Einen Anzeigebildschirm (10), der eine Matrix aus Leuchtpixeln umfasst, die geeignet ist, zu verschiedenen aufeinanderfolgenden Anzeigezeitpunkten $t_i$ ein Bild $I_e(t_i)$ anzuzeigen, das N Bilder $I_{int}^{(k)}(t_i)$ enthält, die von den fernen Systemen (2) übertragen werden und das Gesicht der Gesprächspartner darstellen;
    o eine Kamera (20), die geeignet ist, zu verschiedenen aufeinanderfolgenden Aufnahmezeitpunkten $t_j$ ein Bild $I_c(t_j)$ vom Gesicht des Benutzers aufzunehmen;
    o **dadurch gekennzeichnet, dass** es umfasst:

        o Eine optische Vorrichtung mit Einzelpixel-Bildgebern, die geeignet ist, N Korrekturbilder $I_{co}^{(k)}(t_j)$ auf Grundlage von Untermatrizen $SM_{imp}^{(k)}(t_j)$ mindestens eines Einzelpixel-Bildgebers zu den verschiedenen Aufnahmezeitpunkten $t_j$ zu bestimmen, umfassend:

            • Mindestens eine optische Quelle (31), die geeignet ist, einen Lichtstrahl einer Wellenlänge zu emittieren, die außerhalb des sichtbaren Spektrums liegt, und eine vordefinierte Winkelzone $Z_a$ beleuchtet, die eine Augenpartie $P_o(t_j)$ des Gesichts des Benutzers, die seine Augen enthält, abdeckt;

            • eine Matrix aus Einzelpixel-Bildgebern, die jeweils geeignet sind, einen Teil des Beleuchtungslichtstrahls, der von der Augenpartie $P_o(t_j)$ reflektiert wird, zu sammeln und ein Korrekturbild $I_{co}^{(k)}(t_j)$ auf Grundlage des gesammelten Lichtstrahls zu rekonstruieren, jeweils eine einzige lichtempfindliche Region (34) umfassend, wobei die lichtempfindlichen Regionen (34) in den Anzeigebildschirm (10) integriert sind und sich in einer Hauptzone ($Z_p$) des Anzeigebildschirms (10) befinden, in der sich die N Bilder $I_{int}^{(k)}(t_j)$ der Gesprächspartner befinden;

    o eine Verarbeitungseinheit (40), die geeignet ist:

        • In jedem Bild $I_{int}^{(k)}(t_i)$ des Bildes $I_e(t_i)$ einen Zielpunkt $P_c^{(k)}(t_j)$ zu bestimmen, der sich im Bereich der Augen des Gesprächspartners befindet, und anschließend N Untermatrizen $SM_{imp}^{(k)}(t_j)$ auszuwählen, die jeweils auf einem Zielpunkt $P_c^{(k)}(t_j)$ zentriert sind;
        • das Bild $I_c(t_j)$ zu korrigieren, indem eine Zone des Bildes $I_c(t_j)$, die die Augenpartie $P_o(t_j)$ darstellt, durch die N Korrekturbilder $I_{co}^{(k)}(t_i)$ ersetzt wird, wodurch N korrigierte Bilder $I_{cc}(t_j)$ erhalten werden, die jeweils an das ferne System des entsprechenden Gesprächspartners zu übertragen sind.

2. Videokonferenzsystem (1) nach Anspruch 1, wobei die Matrix aus Einzelpixel-Bildgebern eine Auflösung aufweist, die gleich der der Matrix aus Leuchtpixeln ist.

3. Videokonferenzsystem (1) nach Anspruch 1 oder 2, wobei die Zone $I_{c\_po}(t_j)$ des Bildes $I_c(t_j)$, das die Augenpartie $P_o(t_j)$ darstellt und durch ein Korrekturbild $I_{co}^{(k)}(t_j)$ ersetzt wurde, eine höhere Auflösung aufweist als die einer Zone $I_{c\_br}(t_j)$ des Bildes $I_c(t_j)$, die die Zone $I_{c\_po}(t_j)$ umgibt.

4. Videokonferenzsystem (1) nach Anspruch 3, wobei die Zone $I_{c\_br}(t_j)$ des Bildes $I_c(t_j)$ eine Auflösung aufweist, die niedriger ist als eine native Auflösung des Bildes $I_c(t_j)$ bei seiner Aufnahme durch die Kamera (20).

5. Videokonferenzsystem (1) nach einem der Ansprüche 1 bis 4, wobei die optische Quelle (31) geeignet ist, einen Lichtstrahl ($F_{ec}$) zu emittieren, der die Winkelzone $Z_a$ während einer Abtastdauer T räumlich abtastet, wobei der oder die Einzelpixel-Bildgeber der N Untermatrizen $SM_{imp}^{(k)}(t_j)$ geeignet sind, während der Abtastdauer T $n_i \times p_i$ Aufnahmen vorzunehmen.

6. Videokonferenzsystem (1) nach einem der Ansprüche 1 bis 5, wobei die optische Quelle (31) einen optischen Matrixmodulator umfasst und geeignet ist, die gesamte Winkelzone $Z_a$ gleichzeitig zu beleuchten.

7. Verfahren zur Videokonferenz eines Benutzers mittels des Videokonferenzsystems nach einem der vorstehenden Ansprüche, das die folgenden Schritte umfasst:

- Empfangen der N Bilder $I_{int}^{(k)}(t_i)$, die von den fernen Systemen (2) der Gesprächspartner übertragen werden,
- Anzeigen eines Bildes $I_e(t_i)$, das die Bilder $I_{int}^{(k)}(t_j)$ enthält, durch den Anzeigebildschirm (10) zu verschiedenen Anzeigezeitpunkten $t_i$;

- Bestimmen der N Zielpunkte $P_c^{(k)}(t_j)$, die sich jeweils im Bereich der Augen eines Gesprächspartners befinden;

- Bestimmen der N Untermatrizen $SM_{imp}^{(k)}(t_j)$ mindestens eines Einzelpixel-Bildgebers, die jeweils auf einem bestimmten Zielpunkt $P_c^{(k)}(t_j)$ zentriert sind;
- Aufnehmen eines Bildes $I_c(t_j)$ vom Gesicht des Benutzers durch die Kamera (20) zu verschiedenen Aufnahmezeitpunkten $t_j$;
- Bestimmen einer Winkelzone $Z_a$, die eine Augenpartie $P_o(t_j)$ des Gesichts des Benutzers, die seine Augen enthält, abdeckt;
- Emittieren eines Lichtstrahls einer Wellenlänge, die außerhalb des sichtbaren Spektrums liegt und die Winkelzone $Z_a$ beleuchtet, durch die optische Quelle (31);
- Bestimmen von N Korrekturbildern $I_{co}^{(k)}(t_j)$ auf Grundlage von Untermatrizen $SM_{imp}^{(k)}(t_j)$, deren Einzelpixel-Bildgeber einen Teil des Lichtstrahls, der emittiert und von einer Augenpartie $P_o(t_j)$ des Gesichts des Benutzers, die sich in der Winkelzone $Z_a$ befindet, reflektiert wird, sammelt bzw. sammeln;
- Korrigieren des von der Kamera (20) aufgenommenen Bildes $I_c(t_j)$ durch Ersetzen einer Zone, die die Augenpartie $P_o(t_j)$ darstellt, durch die N Korrekturbilder $I_{co}^{(k)}(t_j)$, wodurch N korrigierte Bilder $I_{cc}(t_j)$ erhalten werden;
- Übertragen der N korrigierten Bilder $I_{cc}(t_j)$ jeweils an das ferne System des entsprechenden Gesprächspartners.

8. Videokonferenzverfahren nach Anspruch 7, wobei die Winkelzone $Z_a(t_j)$ auf Grundlage eines Referenzpunkts $P_u(t_j)$ bestimmt wird, der in dem von der Kamera (20) aufgenommenen Bild bestimmt wird und den Augen des Benutzers zugeordnet ist.

9. Videokonferenzverfahren nach Anspruch 8, wobei die Einzelpixel-Bildgeber, die nicht zu den N bestimmten Untermatrizen $SM_{imp}^{(k)}(t_j)$ gehören, bei dem Schritt des Emittierens des Lichtstrahls nicht aktiviert werden.

**Claims**

1. A videoconferencing system (1), adapted to transmit and receive multimedia signals with N remote videoconferencing systems (2), with N≥1, allowing a user to communicate in real time with N interlocutors using these remote systems (2), including:

   o a display screen (10), including a matrix of emissive pixels adapted to display, at different successive display times $t_i$, an image $I_e(t_i)$ containing N images $I_{int}^{(k)}(t_i)$ transmitted by the remote systems (2) and representing the faces of the interlocutors;
   o a camera (20), adapted to acquire, at different successive acquisition times $t_j$, an image $I_c(t_j)$ of the face of the user;
   o **characterised in that** it includes:

      o an optical device with single-pixel imagers, adapted to determine N correction images $I_{co}^{(k)}(t_j)$ from sub-matrices $SM_{imp}^{(k)}(t_j)$ of at least one single-pixel imager, at the different acquisition times $t_j$, including:

         • at least one optical source (31), adapted to emit a light beam with a wavelength located outside the visible spectrum and illuminating a predefined angular zone $Z_a$ covering an ocular part $P_o(t_j)$ of the face of the user containing his eyes;
         • a matrix of single-pixel imagers, each adapted to collect part of the illumination light beam reflected by the ocular part $P_o(t_j)$ and to reconstruct a correction image $I_{co}^{(k)}(t_j)$ from the collected light beam, each including a single photosensitive region (34), the photosensitive regions (34) being integrated into the display screen (10) and located in a main zone ($Z_p$) of the display screen (10) wherein the N images $I_{int}^{(k)}(t_j)$ of the interlocutors are located;

o a processing unit (40), adapted to:

• determine, in each image $I_{int}^{(k)}(t_j)$ of the image $I_e(t_j)$, a target point $P_c^{(k)}(t_j)$ located at the level of the eyes of the interlocutor, then select N sub-matrices $SM^{(k)}_{imp}(t_j)$ each centred on a target point $P_c^{(k)}(t_j)$;
• correct the image $I_c(t_j)$ by replacing a zone of the image $I_c(t_j)$ representing the ocular part $P_o(t_j)$ by the N correction images $I_{co}^{(k)}(t_j)$, thus obtaining N corrected images $I_{cc}(t_j)$ to be transmitted each to the remote system of the corresponding interlocutor.

2. The videoconferencing system (1) according to claim 1, wherein the matrix of single-pixel imagers has a resolution equal to that of the matrix of emissive pixels.

3. The videoconferencing system (1) according to claim 1 or 2, wherein the zone $I_{c\_po}(t_j)$ of the image $I_c(t_j)$ representing the ocular part $P_o(t_j)$ and replaced by a correction image $I_{co}^{(k)}(t_j)$ has a higher resolution than that of a zone $I_{c\_br}(t_j)$ of the image $I_c(t_j)$ surrounding the zone $I_{c\_po}(t_j)$.

4. The videoconferencing system (1) according to claim 3, wherein the zone $I_{c\_br}(t_j)$ of the image $I_c(t_j)$ has a resolution lower than a native resolution of the image $I_c(t_j)$ when it is acquired by the camera (20).

5. The videoconferencing system (1) according to any one of claims 1 to 4, wherein the optical source (31) is adapted to emit a light beam ($F_{ec}$) spatially scanning the angular zone $Z_a$ for a scanning duration T, the single-pixel imager(s) of the N sub-matrices $SM_{imp}^{(k)}(t_j)$ being adapted to perform $n_i \times p_i$ acquisitions during the scanning duration T.

6. The videoconferencing system (1) according to any one of claims 1 to 5, wherein the optical source (31) includes a matrix optical modulator and is adapted to illuminate the entire angular zone $Z_a$ simultaneously.

7. A method of videoconferencing a user by means of the videoconferencing system according to any one of the preceding claims, including the following steps:

o receiving the N images $I_{int}^{(k)}(t_j)$ transmitted by the remote systems (2) of the interlocutors,
o displaying an image $I_e(t_j)$ by the display screen (10), at different display times $t_i$, containing the images $I_{int}^{(k)}(t_j)$;
o determining the N target points $P_c^{(k)}(t_j)$ each located at the level of the eyes of an interlocutor;
o determining the N sub-matrices $SM_{imp}^{(k)}(t_j)$ of at least one single-pixel imager, each centred on a determined target point $P_c^{(k)}(t_j)$;
o acquiring an image $I_c(t_j)$ of the face of the user by the camera (20) at different acquisition times $t_j$;
o determining an angular zone $Z_a$ covering an ocular part $P_o(t_j)$ of the face of the user containing his eyes;
o emitting a light beam by the optical source (31) of wavelength located outside the visible spectrum and illuminating the angular zone $Z_a$;
o determining N correction images $I_{co}^{(k)}(t_j)$ from sub-matrices $SM_{imp}^{(k)}(t_j)$ the single-pixel imager(s) of which collect part of the light beam emitted and reflected by an ocular part $P_o(t_j)$ of the face of the user located in the angular zone $Z_a$;
o correcting the image $I_c(t_j)$ acquired by the camera (20) by replacing a zone representing the ocular part $P_o(t_j)$ by the N correction images $I_{co}^{(k)}(t_j)$, thus obtaining N corrected images $I_{cc}(t_j)$;
o transmitting the N corrected images $I_{cc}(t_j)$, each to the remote system of the corresponding interlocutor.

8. The videoconferencing method according to claim 7, wherein the angular zone $Z_a(t_j)$ is determined from a reference point $P_u(t_j)$ determined in the image $I_c(t_j)$ acquired by the camera (20) and associated with the eyes of the user.

9. The videoconferencing method according to claim 8, wherein the single-pixel imagers which do not belong to the N determined sub-matrices $SM_{imp}^{(k)}(t_j)$ are not activated during the light beam emission step.

**Fig.1**

**Fig.2**

**Fig.3A**

**Fig.3B**

14

34

37

13

34

37

$SM_{imp}^{k}(t_j)$

38

**Fig.4A**

13

36                    16

35                    15

34                    14

**Fig.4B**

$P_c^{(1)}(t_j)$      $P_c^{(2)}(t_j)$

10

12

$Z_p$

**Fig.5A**

$P_u(t_j)$

$P_o(t_j)$

**Fig.5B**

Fig.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7126627 B1
- WO 2019165124 A1
- FR 3063411
- WO 2019165124 A

**Littérature non-brevet citée dans la description**

- **BOHANNON et al.** Eye contact and video-mediated communication: A review. *Displays,* 2012, vol. 34 (2), 177-185
- **TYLER et al.** intitulé SiN integrated optical phased array for two-dimensional beam steering of a single near-infrared wavelength. *Opt. Express,* 2019, vol. 27, 5851-5858
- **GIBSON et al.** Single-pixel imaging 12 years on: a review. *Opt. Express,* 2020, vol. 28 (19), 28190-28208
- **DUARTE et al.** intitulé Single-Pixel Imaging via Compressive Sampling. *IEEE Signal Processing Mag,* 2008, vol. 25 (2), 83-91